# EUROPEAN PATENT SPECIFICATION

(11) **EP 3 842 147 B1**
(45) Date of publication and mention of the grant of the patent: **04.12.2024**
(21) Application number: 20159973.5
(22) Date of filing: 28.02.2020
(51) Int. Cl.: B01L 3/00, B03C 5/00, B03C 5/02, G01N 15/14, G01N 15/00, G01N 30/00, G01N 15/02

(54) **FIELD-ARRAY FREE FLOW FRACTIONATION**
FELD-ARRAY-FREIFLIESSFRAKTIONIERUNG
FRACTIONNEMENT DE RÉSEAU À ÉCOULEMENT LIBRE

(30) Priority: 27.12.2019 EP 19219882; 27.12.2019 EP 19219885
(43) Date of publication of application: 30.06.2021
(73) Proprietor: Imec VZW, 3001 Leuven (BE); Katholieke Universiteit Leuven KU Leuven Research & Development, 3000 Leuven (BE)
(72) Inventor: LIU, Chengxun, 3001 Leuven (BE); STASSEN, Andim, 3001 Leuven (BE); SET, Ying Ting, 3001 Leuven (BE)
(74) Representative: Winger

(56) References cited:
- WO-A2-2009/146143
- US-A1- 2004 011 651
- US-A1- 2006 102 482
- US-A1- 2006 289 341

## Description

### Technical field of the invention

The present invention relates to a field-flow fractionation device for the continuous separation of sample components; and to a method for fabricating the same.

### Background of the invention

Microfluidics has been widely and increasingly used in many applications such as diagnostics, therapy, and agriculture. In-vitro microfluidics processing is typically composed of sample preparation, reaction, and signal detection. Sample preparation and the biological assay require one or multiple separations, mixing, washing, enrichment or dilution. Among a variety of sample preparation steps, separating sample components, such as bioparticles, is a frequent demand in many biological and medical applications, e.g. preparative bioparticle separation. Preparative bioparticle separation is essential to ensure enough purity of the bioparticle for downstream analysis such as protein assay or PCR. Preparative separation is traditionally done by filtering, centrifugation, or membrane dialysis by manual handling. Like traditional bioanalytical instruments, microfluidic systems also benefit from the integration of preparative bioparticle separation as opposed to off-chip manual preparation.

Sample components separation is usually a challenge for microfluidic sample preparation devices because of the intrinsically low throughput despite their advantages such as superior separation resolutions and rare sample addressability. How to combine the high separation resolution and high throughput is an unmet need for microfluidic "preparative separation". One typical approach is the inclusion of a mechanical sieve to separate big particles from smaller ones (e.g. cell separation from serum). This is very efficient if the bioparticles-of-interest are distinct in size, especially if they are larger than other background particles. This approach is either unsuitable or very complicated if the sample components have medium sizes or if a spectrum of components of different sizes needs to be separated and collected. Also, the sieve structure often easily gets clogged.

Another approach is field-flow fractionation (FFF), where sample components are continuously separated in the direction (Y-direction) perpendicular to the feeding flow (X-direction). This approach separates the feeding flow from the separation physics, thereby allowing continuous separation of sample components and thus improving the throughput.

A shortcoming of regular FFF is that its separation resolution by unit of time is low. This has the negative consequence that the device size must be large.

Kang et al. (Microfluid Nanofluid 6: 431-460, 2009) discloses the application of FFF to DNA separation by size. Since the DNA electrophoretic mobility does not differ by DNA size, separating DNA by FFF requires either tagging DNA with neutral molecules such as proteins or configuring the separation matrix in a complex way (e.g. pH gradient or ion concentration gradient).

WO2009146143A2 discloses devices and techniques that involve a combination of multidimensional electrokinetic, dielectrophoretic, electrophoretic and fluidic forces and effects for separating cells, nanovesicles, nanoparticulates and biomarkers (DNA, RNA, antibodies, proteins) in high conductance (ionic) strength biological samples and buffers. More in particular, a combination of continuous and/or pulsed dielectrophoretic (DEP) forces, continuous and/or pulsed field DC electrophoretic forces, microelectrophoresis and controlled fluidics are utilized with arrays of electrodes.

US20040011651A1 discloses methods and apparatus for discriminating matter in a chamber having an inlet port and an outlet port utilizing dielectrophoresis and field flow fractionation. A carrier medium is introduced into the inlet port and is directed from the inlet port to the outlet port according to a velocity profile. A programmed voltage signal is applied to an electrode element coupled to the chamber to form a dielectrophoretic force on the matter. The dielectrophoretic force is balanced with a gravitational force to displace the matter to positions within said velocity profile in the carrier medium to discriminate the matter. A chamber having a top and bottom outlet port may be utilized to withdraw a first portion of a carrier medium from the top outlet port at a first, controllable fluid flow rate and to withdraw a second portion of the carrier medium from the bottom outlet port at a second, controllable fluid flow rate.

US20060289341A1 discloses methods and devices for the separation of particles in a compartment of a fluidic microsystem. A liquid in which particles are suspended is moved with a predetermined direction of flow through the compartment, and a deflecting potential is generated in which at least a part of the particles is moved relative to the liquid in a direction of deflection, whereby further at least one focusing potential is generated, so that at least a part of the particles is moved opposite to the direction of deflection relative to the liquid by dielectrophoresis under the effect of high-frequency electrical fields.

US20060102482A1 discloses a fluidic system for analysing biomolecules in solution comprising a microchannel having an inlet port and an outlet port across which extends a set of interdigitated electrodes to which can be powered with an AC voltage of 0-20V and a frequency of 100 Hz to 20 MHz. A fluid flow through the microchannel carries functionalised microbeads and by applying the appropriate AC voltage and frequency to the electrodes the microbeads can be retained at the site of the electrodes to form a packed bed. The packed bed of microbeads is then subsequently perfused with a sample containing the analyte specifically bound by the ligand immobilised on the microbeads. The analyte is separated and concentrated by the packed microbeads and can be detected directly or indirectly by further perfusion of labelled reagent molecules.

There is still a need in the art for a field-flow fractionation device addressing one or more of the above issues.

### Summary of the invention

It is an object of the present invention to provide good apparatus for the continuous separation of sample components, as well as methods for fabricating the same.

The above objective is accomplished by a device according to the present invention and by a method for its manufacture.

The claimed invention is set out in the appended set of claims.

It is an advantage of embodiments of field-flow fractionation devices of the present invention that they allow continuous separation and hence a high throughput.

It is an advantage of embodiments of field-flow fractionation devices of the present invention that they may have a high separation resolution.

It is an advantage of embodiments of field-flow fractionation devices of the present invention that they may be used with a variety of samples, including samples comprising analytes close in size and/or of medium size.

It is an advantage of embodiments of field-flow fractionation devices of the present invention that they are relatively simple.

It is an advantage of embodiments of field-flow fractionation devices of the present invention that they may have a low clogging tendency.

It is an advantage of embodiments of field-flow fractionation devices of the present invention that they may provide a sample separation in a short time.

It is an advantage of embodiments of field-flow fractionation devices of the present invention that they may be relatively small.

It is an advantage of embodiments of field-flow fractionation devices of the present invention that they allow the separation of unmodified nucleic acids. For instance, the device does not require the attachment of tags to the nucleic acids.

It is an advantage of embodiments of field-flow fractionation devices of the present invention that no separation matrix needs to be present in the channel for the device to perform well. In particular, a separation matrix comprising a pH gradient, or an ion concentration gradient is not needed.

It is an advantage of embodiments of field-flow fractionation devices of the present invention that they may operate at relatively low power while nevertheless provide high resolution. Since the AC force field is very local, the local AC field strength and field gradient can be easily much higher than if a single bulk AC field was applied across the whole channel in the second direction by means of only two electrodes. Since every element of the array is an electrode (e.g. a pillar electrode), the field strength is inversely proportional to the inter-electrode distance, easily leading to 10⁶ V/m for a 10V potential difference whereas if a single bulk 10V AC electric field had to be applied, the field strength would typically be inversely proportional to the channel width, often leading to 10⁴ V/m. For dielectrophoresis (DEP) such a hundred times higher field strength results in separation force which is 10,000 times higher. In other words, for the same separation efficiency, the electrode array FA-FFF of embodiments of the first aspect only requires 1/10,000 of the electric potential than would be required for a single bulk AC electric field.

It is an advantage of embodiments of field-flow fractionation devices of the present invention that they may be programmable. When the field array electrodes are grouped in two sets, or even individually addressed, the separation can be adjusted in a pre-programmed way or in real-time by adjusting the AC force field accordingly.

Particular and preferred aspects of the invention are set out in the accompanying independent and dependent claims. Features from the dependent claims may be combined with features of the independent claims and with features of other dependent claims as appropriate and not merely as explicitly set out in the claims.

Although there has been constant improvements, changes, and evolutions of devices in this field, the present concepts are believed to represent substantial new and novel improvements, including departures from prior practices, resulting in the provision of more efficient, stable and reliable devices of this nature.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

### Brief description of the drawings

FIGs. 1 to 4 show vertical cross-sections through illustrative representations of intermediate structures in the construction of a device according to an embodiment of the present invention.
FIGs. 5 and 6 show vertical cross-sections through illustrative representations of intermediate structures in the construction of a device according to an alternative embodiment of the present invention.
FIG. 7 shows a schematic representation of a top view of an embodiment of the present invention.
FIG. 8 shows a perspective view corresponding to FIG. 4.
FIG. 9 is a graph of the resolution over time predicted by modelling of a device according to an embodiment of the present invention for separating a 120 bp double-strand DNA from a 125 bp double-strand DNA.
FIG. 10 is a schematic representation of an equivalent circuit corresponding to an array of electrodes in a liquid, in presence of only the DC voltage across the channel.
FIG. 11 is a schematic representation of an equivalent circuit corresponding to an array of electrodes in a liquid, in presence of only the AC voltage between two sets of electrodes within the array.
FIG. 12 is a schematic representation of an equivalent circuit corresponding to two electrodes within an array, each electrode belonging to a different set within the array, in a liquid, in presence of only the AC voltage between the two electrodes, wherein the electrodes are capacitively connected to the AC power source.
FIG. 13 is a vertical cross-section through a schematic representation of a device according to an embodiment of the present invention.
FIG. 14 shows a schematic representation of a top view of a device according to embodiments of the present invention wherein the actuator comprises an acoustic wave generator.
FIG. 15 shows a schematic representation of a vertical cross-section through a device akin to the one of FIG. 14 according to embodiments of the present invention.
FIG. 16 shows a schematic representation of a top view of a device according to embodiments of the present invention wherein adjacent rows of the array of electrodes are arranged so that adjacent electrodes belonging to adjacent rows are aligned in a direction forming a second angle with the first direction; the actuator is not shown on this figure.

In the different figures, the same reference signs refer to the same or analogous elements.

### Description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. The term "comprising" therefore covers the situation where only the stated features are present and the situation where these features and one or more other features are present. The word "comprising" according to the invention therefore also includes as one embodiment that no further components are present. Thus, the scope of the expression "a device comprising means A and B" should not be interpreted as being limited to devices consisting only of components A and B. It means that with respect to the present invention, the only relevant components of the device are A and B.

Similarly, it is to be noticed that the term "coupled", also used in the claims, should not be interpreted as being restricted to direct connections only. The terms "coupled" and "connected", along with their derivatives, may be used. It should be understood that these terms are not intended as synonyms for each other. Thus, the scope of the expression "a device A coupled to a device B" should not be limited to devices or systems wherein an output of device A is directly connected to an input of device B. It means that there exists a path between an output of A and an input of B which may be a path including other devices or means. "Coupled" may mean that two or more elements are either in direct physical or electrical contact, or that two or more elements are not in direct contact with each other but yet still co-operate or interact with each other.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly, it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

In the description provided herein, numerous specific details are set forth. However, it is understood that embodiments of the invention may be practiced without these specific details. In other instances, well-known methods, structures and techniques have not been shown in detail in order not to obscure an understanding of this description.

The invention will now be described by a detailed description of several embodiments of the invention. It is clear that other embodiments of the invention can be configured according to the knowledge of persons skilled in the art without departing from the technical teaching of the invention, the invention being limited only by the terms of the appended claims.

In a first aspect, the present invention relates to an FFF device. An FFF device is a separation device where a field is applied to a sample liquid moved through a channel, the field being at an angle different from zero (typically perpendicular) to the direction of sample liquid movement, thereby causing separation of the components present in the sample liquid.

The field-flow fractionation device is for the continuous separation of sample components and comprises:
a. A channel comprising a sample inlet and a plurality of sample outlets, the channel being suitable for being coupled to a flow generator for translocating the sample components along the channel in a first direction from the sample inlet to the plurality of sample outlets,
b. An actuator, which is not the flow generator, coupled to the channel, for translocating the sample components in a second direction, at a first angle with the first direction,
c. An array of electrodes, which is not the flow generator, and which is distinct from the actuator
   i. in a path taken by the sample components in the channel,
   ii. arranged in a plurality of rows, and
   iii. comprising electrical connections (11) for electrically connecting the array to an AC power source in such a way that adjacent rows (10) can be set at different AC potentials and every other row (10) can be set at the same AC potential, wherein the array of electrodes (9) is in a path taken by the sample components (2) in the channel (3), and the electrodes have a height of from 80 to 100% of the channel height.

The device of the first aspect is suitable for the continuous separation of sample components. Most separation devices currently available function batch-wise. Batch-wise operation means that a sample is typically introduced in its entirety in the device before the separation process starts in order to avoid a composition overlap between the collected fractions, i.e. a loss of resolution. The fact that, in the present invention, the device is suitable for the continuous separation of sample components, means that the sample can still be loaded in the device while the separation process is already ongoing without impact or with a limited impact on the resolution of the separation. This has for consequence that the sample can be continuously loaded, and the sample components can be continuously separated at the same time. Continuous separation implies that the feeding of the sample can continue at least until a part of the sample has already reached the array of electrodes. Preferably, it implies that the feeding of the sample may be continued at least until a part of the sample has already reached the plurality of sample outlets.

The device is for the separation of sample components.

The sample comprises components. The components are typically a liquid medium and a plurality of further components. The further components can be referred to as analytes. The device is typically for the separation of analytes. The analytes are typically bioparticles. Bioparticles are particles of biological origin. Examples of bioparticles are viruses, bacteria, cells, extracellular vesicles, and biomolecules. Examples of biomolecules are proteins and nucleic acids. Examples of nucleic acids are DNA and RNA. The sample may comprise different types of bioparticles, for instance proteins and nucleic acids. In embodiments, the components may comprise bioparticles. In embodiments, the device may be for continuously separating bioparticles, such as nucleic acids.

Typically, a sample comprising a mixture of components will be fed in the device and the device will output a plurality of fractions. Typically, the proportion of the various components will be different in each fraction. Typically, the proportion of the various analytes will be different in each fraction. Typically, each fraction will be enriched in at least one (but not all) and preferably in only one of the analytes.

In a preferred embodiment, the sample may comprise a plurality of different nucleic acids (e.g. DNA double strands or single strands) and the device is for separating this plurality of different nucleic acids into fractions, wherein, for each fraction, the proportion of at least one (but not all) and preferably of only one of said plurality of different nucleic acids, with respect to the other nucleic acids present in the sample, is larger than in the sample. In embodiments, the different nucleic acids may comprise nucleic acids differing in length by 5 base pairs or less. In embodiments, the device of the present invention is suitable for separating nucleic acids differing in length by 1 base pair or more. In embodiments, the device of the present invention is suitable for separating nucleic acids differing in length by 1 to 5 base pairs. For instance, the device of the present invention is suitable for separating a first nucleic acid having a first length (e.g. from 10 to 500 base pairs), from a second nucleic acid comprising the same base pair sequence as the first nucleic acid but being longer than said first nucleic acid by 1 to 5 base pairs.

The sample can be of any origin. For instance, it can be a natural sample, a sample stemming from the manipulation of a natural sample, or a sample of synthetic origin.

The device comprises a channel. The channel is a conduit comprising or being a hollow object suitable for conducting liquids from an inlet to the plurality of outlets of the hollow object.

In embodiments, the bottom of the channel may comprise the array of electrodes on a substrate, the top of the channel may comprise a cover, and the bottom of the channel may be linked to the top of the channel by sidewalls, thereby closing the channel laterally.

Typically, the substrate may comprise a base substrate, an optional isolation layer on the base substrate, and electrical connections over the base substrate (e.g. on the base substrate if no isolation layer is present or on the isolation layer otherwise).

The base substrate may be a dielectric substrate or a semiconductor substrate. When the base substrate is a dielectric substrate (e.g. a glass substrate), the electrical connections (e.g. conductive lines) may be on the base substrate. When the base substrate is a semiconductor substrate, the isolation layer is typically present between the semiconductor substrate and the electrical connections (e.g. conductive lines) in order to minimize parasitic coupling of the AC signal to the substrate.

In embodiments, the substrate may comprise a passivation layer in physical contact with the bottom of each electrode of the array. This passivation layer is optional. The passivation layer is typically a dielectric layer. The dielectric layer may, for instance, be an oxide layer such as a silicon oxide layer. The passivation layer may, for instance, have a thickness of from 0.05 to 4 µm, for instance 0.5 to 4 µm or from 1 to 2 µm.

The substrate further comprises electrical connections (e.g. conductive lines) for connecting each electrode of the array to the AC power source. This electrical connection can be a resistive connection (when no passivation layer is present between the conductive electrical connections and the electrodes) or a capacitive connection (when the passivation layer is present between the electrical connections and the electrodes).

The channel comprises a sample inlet and a plurality of sample outlets.

In embodiments, more than one inlet may be present. For instance, an inlet may be for the sample and another inlet may be for a buffer liquid.

At least two outlets are present. The number of sample outlets may be from 2 to 10, for instance from 2 to 7 or from 2 to 5.

The length of the channel may, for instance, be from 1 to 100 mm, or from 5 to 80 mm.

A main portion of the channel may be uniform in a cross-sectional area and this area may be from 0.05 to 0.60 mm² when measuring at a position along the channel where no electrodes of the array are present.

The channel is suitable for being coupled to a flow generator for translocating the sample components along the channel in a first direction from the sample inlet to the plurality of sample outlets. Such a coupling can be achieved by coupling a flow generator to the sample inlet or to the plurality of sample outlets. However, it is more convenient to couple the flow generator to the sample inlet. The flow generator is typically a pump but could be any other means (e.g. a syringe) for generating a flow of sample in the channel. The first direction is typically a straight direction. The first direction is typically parallel to the longitudinal extent of the channel.

The device comprises an actuator for translocating the sample components in a second direction, at a first angle with the first direction. This first angle is different from zero. Even in the absence of a flow generator, i.e. when the channel is merely adapted to be coupled to a flow generator without that flow generator being actually present, one can determine that the actuator is distinct from the flow generator simply because the actuator is not suitable for translocating the sample components along the channel in a first direction from the sample inlet tot the plurality of sample outlets and because the channel is adapted for being coupled to further means (i.e. to a flow generator) which is not the actuator, i.e. which is distinct therefrom.

In absence of operation of the actuator and of the AC power source, the components from the sample would remain undeflected in the second direction.

The actuator may for instance comprise a pair of electrodes for connection to a DC power source, an acoustic wave generator (e.g. surface acoustic wave electrodes connected to an AC power source), or of a combination thereof.

In preferred embodiments, the actuator may comprise a pair of electrodes for connection to a DC power source.

In embodiments, the field-flow fractionation device for the continuous separation of sample components may thus comprise:
a. A channel comprising a sample inlet and a plurality of sample outlets, the channel being suitable for being coupled to a flow generator for translocating the sample components along the channel in a first direction from the sample inlet to the plurality of sample outlets,
b. A pair of electrodes for electrical connection to a DC source and positioned in such a way as to enable the generation across the channel of an electric field in a second direction, at an angle with the first direction,
c. An array of electrodes for electrical or capacitive connection to an AC source, the array being
   i. in a path taken by the sample components in the channel,
   ii. arranged in a plurality of rows and in such a way that adjacent rows can be set at different (AC) potentials and every other row can be set at the same (AC) potential.

The electrodes of the pair are distinct from the electrodes of the array. The electrodes of the pair are not electrically connected to the electrodes of the array when the channel is empty, i.e. when it is free of electrolyte (e.g. sample). The only electrical connection existing between the electrodes of the pair and the electrodes of the array is via the presence of the sample in the channel, which typically is an electrolyte. The electrodes of the pair are positioned in such a way as to enable the generation across the channel of an electric field in a second direction, at a (non-zero) first angle with the first direction. The electrodes of the pair are preferably separated by a distance at least equal to the extent of the array of electrodes in the second direction.

In embodiments, the electrodes of the pair may face each other. They may be aligned in a direction perpendicular to the first direction. In other words, a normal to a main surface of both electrodes may be at said non-zero first angle with the first direction.

In embodiments, each electrode of the pair may be in a distinct trench in the cover. The trenches in the cover run along at least a portion of the length of the channel. In embodiments, this portion of the length may represent at least 50%, preferably at least 75% of the length of the channel. In embodiments, this portion of the length along which the trenches run may overlap with the entirety of the potion of the channel comprising the array.

In other embodiments, the trenches may only partly overlap with each other, thereby allowing the generation of a DC field at a first angle different from 90° from the first direction. It is also possible to have no overlap between the trenches. For instance, the first trench may be positioned upstream of the array and the second trench may be positioned downstream of the array.

The trenches in the cover may be separated from the channel by a permeable membrane. The permeable membrane typically allows electrical current flow between the sample in the channel and an electrolyte in each of the trenches. The permeable membrane typically does not allow gas to permeate across the membrane between the channel and each of the trenches. An example of a suitable membrane is Nafion^{™}.

In embodiments, the two electrodes of the pair may together be formed of a pair of conductive elements running along at least a portion of the length of the channel. In embodiments, this portion of the length may represent at least 50%, preferably at least 75% of the length of the channel. In embodiments, this portion of the length along which the conductive elements run may overlap with the entirety of the potion of the channel comprising the array.

In other embodiments, the electrodes of the pair may only partly overlap with each other, thereby allowing the generation of a DC field at a first angle different from 90° from the first direction. It is also possible to have no overlap between the electrodes of the pair. For instance, the first electrode may be positioned upstream of the array and the second electrode may be positioned downstream of the array.

The pair of electrodes is adapted to be electrically connected to a DC power source. In embodiments, the device may comprise the DC power source. In the presence of the DC power source, the voltage across the two electrodes may be from 5 to 100 V, preferably 5 to 30 V, more preferably from 8 to 16V.

When the device is connected to the DC power source, gas bubbles can be created on one or both electrodes. However, the bubbles are typically blocked by the membrane therefore not affecting the sample flow in the channel.

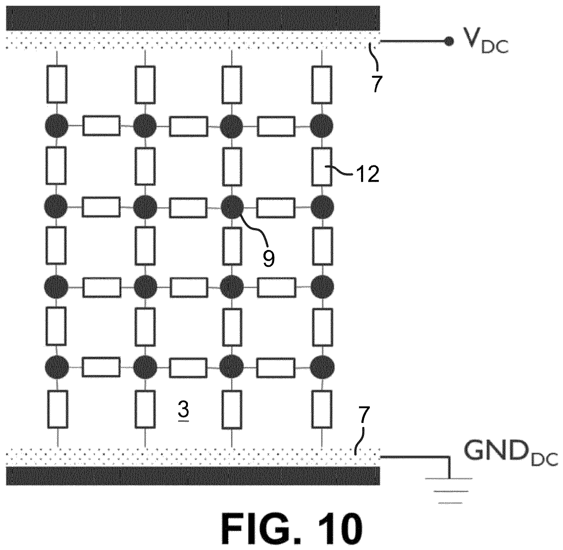

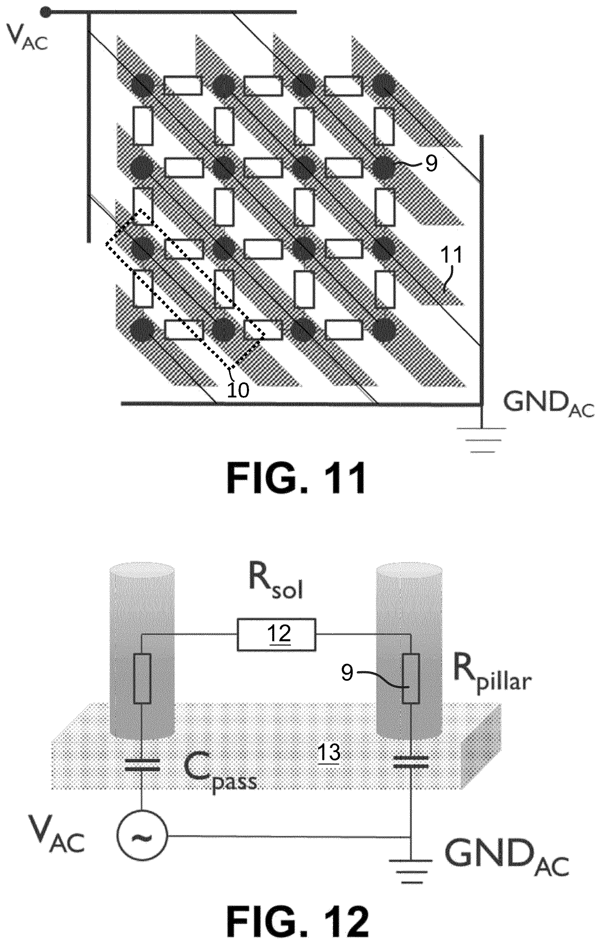

We now refer to FIGs.10, 11 and 13 which illustrate an embodiment where the actuator comprises a pair of electrodes different form the electrodes of the array. When the device (1) is connected to the DC power source (V_{DC}), a DC electric field forms in the sample, which can be represented as a resistor (12) network (see FIG. 10), and each electrode (9) of the array picks up the DC potential of the liquid in its vicinity. Meanwhile, two different AC voltages (V_{AC}), e.g. 10V for electrodes on every other row (10) (electrodes of a first set) and 0V for electrodes on the remaining rows (10) (electrodes of a second set), can be applied to the array (see FIG. 11).

In embodiments, the AC voltage difference between the electrodes (9) on every other rows (10) (i.e. the electrodes (9) of the first set) and the remaining electrodes (9) (i.e. the electrodes (9) of the second set) may be from 1 to 100 V, for instance from 1 to 25V (e.g. from 4 to 25V), preferably from 1 to 12V (e.g. from 8 to 12V. In other words, in embodiments, said different AC potentials may differ by 1 to 100V, preferably 1 to 25V, more preferably 1 to 12V. For instance, said different AC potentials may differ by 4 to 25V.

The selection of the difference in AC potential may be influenced by the gap between the electrodes. For a larger gap, a larger AC potential difference is preferred, and vice versa. For instance, for a gap of from 25 to 50 µm, an AC potential difference of from 50 to 100V is preferred; and for a gap of from 1 to 24 µm, an AC potential difference of from 1 to 12V is preferred.

FIG. 12 is a schematic representation of an equivalent circuit corresponding to an embodiment where, in order to decouple the AC potential (V_{AC}) from the DC potential (V_{DC}), a capacitor (Cₚₐₛₛ) (typically a passivation layer (13)) is added between the AC voltage source and each set of electrodes (9). The capacitance value is typically sufficiently large so that the resultant impedance is smaller than the resistance of each electrode (9) and also smaller than the impedance between electrodes (9) of different sets. Due to the presence of a capacitor (Cₚₐₛₛ) for each electrode (9) of the array, each electrode (9) within a set of the array will have the same AC potential (V_{AC}) but possibly different DC potential (V_{DC}), and the DC and AC voltages can be tuned independently. Also depicted in FIG. 12 is the resistance (12) associated with the presence of the liquid sample.

The devices of the first aspect according to embodiments of the present invention wherein the actuator comprises a pair of electrodes are particularly well suited to the separation of nucleic acids. Indeed, the devices according to the first aspect of the present invention are most effective to separate polarizable elements and nucleic acids are particularly polarizable.

In embodiments where the substrate comprises a passivation layer in physical contact with the bottom of each electrode of the array, and wherein the actuator comprises a pair of electrodes for connection to a DC power source, a good decoupling can be achieved between the AC potential applied to the electrodes of the array and the DC potential imposed by the presence of a pair of electrodes as the actuator and experienced at the position of each electrode of the array.

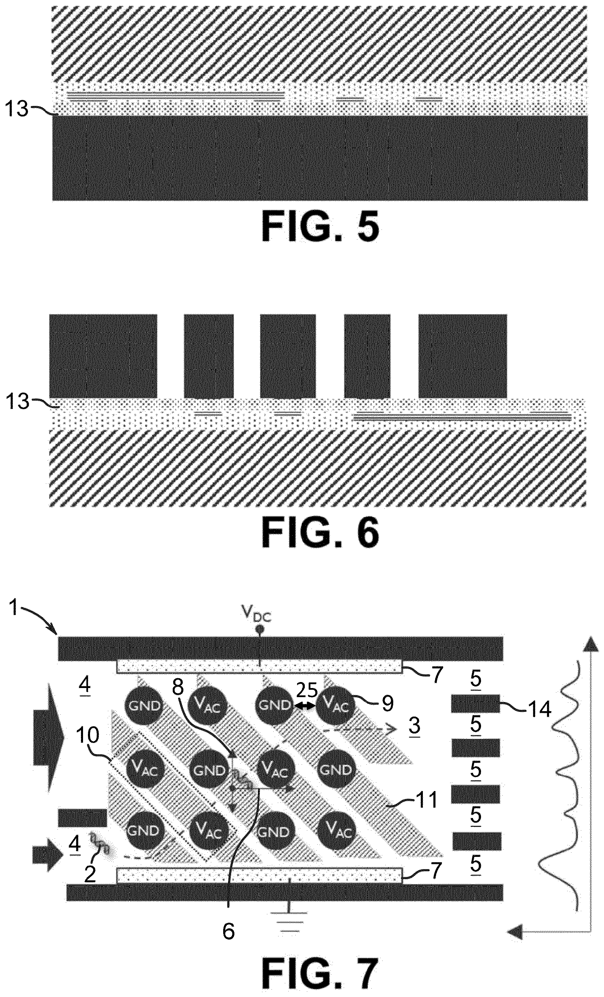

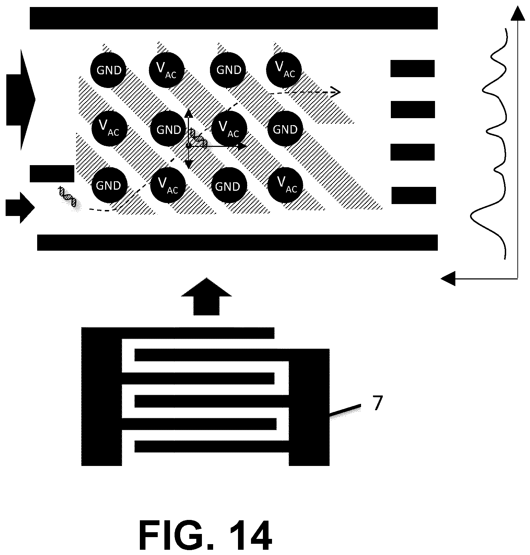

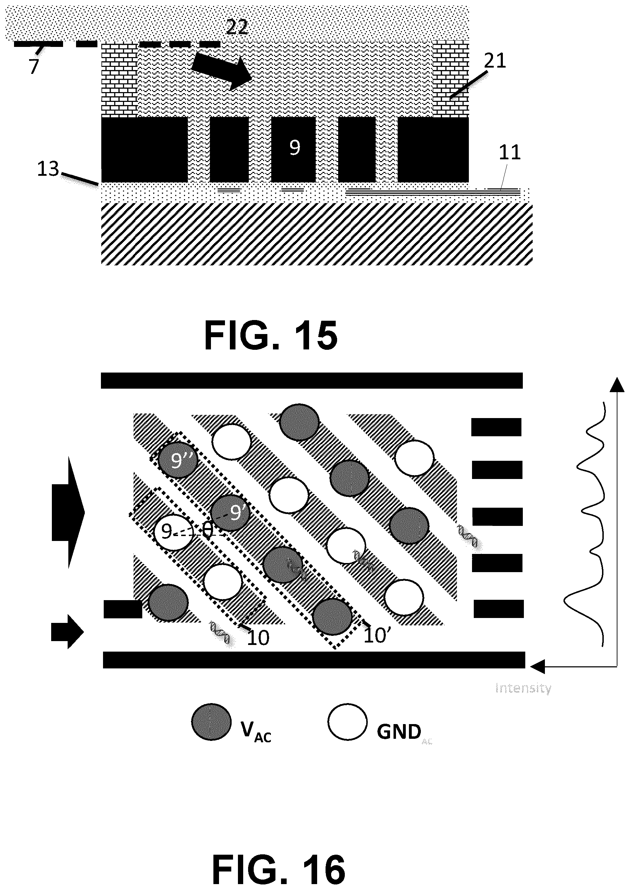

We now refer to FIGs. 14 and 15. FIGs. 14 and 15 are analogous to FIG. 7 (see infra) and 13 respectively except for the fact that the pair of electrodes is not present and that the actuator (7) takes the form of an acoustic wave generator, here a pair of surface acoustic wave electrodes, connected to an AC power source. In embodiments, the acoustic wave generator (7), e.g. the surface acoustic wave electrodes (7) may be attached to the cover (22) of the channel in such a way as to be in the channel.

The second direction corresponds to the direction of the flow of components when the flow generator is not actuated and only the actuator is actuated.

The second direction may be at a first angle of from 30 to 90° with the first direction and is preferably perpendicular to the first direction.

Typically, step b of generating an AC electric field between adjacent rows has for consequence that adjacent rows receive a different contribution to their electrical potential from the AC power source and that every other row receives a same contribution to their electrical potential from the AC power source.

In embodiments, the electrodes of the array may be arranged in a plurality of rows and may be electrically connectable by electrical connections to the AC power source and in such a way that adjacent rows can be set at different potentials and every other row can be set at the same potential. In other words, in embodiments, the array of electrodes (9) may comprise two sets of electrodes, each set forming a plurality of rows, the rows of the first set alternating with the rows of the second set in the array. In embodiments, the AC voltage difference between the electrodes (9) on every other rows (10) (i.e. the electrodes (9) of the first set) and the remaining electrodes (9) (i.e. the electrodes (9) of the second set) may be from 1 to 100V, preferably from 1 to 25V, more preferably from 1 to 12V. For instance, said different AC potentials may differ by 4 to 25V.

In embodiments, the array may comprise at least four rows, each rows comprising at least two electrodes.

The rows of the array are preferably arranged so that they are neither parallel to the first direction, nor to the second direction. The rows are preferably oblique with respect to both the first direction and the second direction. For instance, the rows (10) may be at an third angle of from 40 to 50° with the first direction (6). This situation is depicted in FIG.7. In embodiments, when the rows are arranged so that they are neither parallel to the first direction, nor to the second direction, the length of each row may be adapted so that the electrodes of the array form a rectangle. Preferably, the rectangle has two sides parallel to the first direction and two sides perpendicular thereto.

We now refer to Fig. 16. In embodiments, when the actuator comprises the array itself, adjacent rows of the array may be arranged so that adjacent electrodes (9, 9') belonging to adjacent rows (10, 10') are aligned in a direction forming a second angle (θ) of for instance from 1° to 40°, preferably from 5° to 30°, with the first direction. This allows the components of the sample to periodically experience a dielectrophoretic force in the second direction during their flow in the first direction. This, in turn, allows already some separation of the components of the sample in a direction at a first angle with the first direction, even in the absence of an actuator. It is noteworthy that a first electrode (9) has a plurality of second electrodes (9', 9") that could be considered adjacent thereto but it is sufficient if one of the second electrodes (9', 9") is aligned with the first electrode (9) in a direction forming a second angle (θ) of from 1° to 40°, preferably from 5° to 30° with the first direction for the above alignment condition to be fulfilled.

The electrodes of the array may be made of any conductive material. For instance, they can be made of metal or of a doped semiconductor. Preferably, the electrodes of the array are made of doped silicon. This is advantageous because doped silicon can have a conductivity intermediate between the conductivity of typical liquid media composing the samples and the conductivity of the electrical connections for connecting each electrode to the AC power source. This is advantageous because it helps maximizing the power delivered to the liquid instead of having that power lost in the electrical connections or in the doped-silicon pillars. Furthermore, the fabrication of doped silicon electrodes is compatible with standard semiconductor processing practices.

In embodiments, the array of electrodes may comprise connections resistively connecting the electrodes of the array and allowing electrical (resistive or capacitive) connection to an AC power source, in such a way that adjacent rows can be set at different potentials and every other row can be set at the same potential. A capacitive connection can be obtained by having a dielectric layer between the array of electrodes and (the connections to) the AC power source.

In embodiments where the actuator is a pair of electrodes connected to a DC power source, the capacitive connection permits the AC potential set at the level of the electrodes of the array to be independent of the DC potential set at the level of the pair of electrodes for generating an electric field in the second direction. A capacitive connection can be obtained by having a dielectric layer between the array of electrodes and (the connections to) the AC power source.

In embodiments, the electrodes of the array may be connected by electrical connections allowing the setting of each electrode to a potential independently. In embodiments, the array of electrodes may comprise electrical connections connecting the electrodes of the array and allowing connection to an AC power source, in such a way that each electrode can be set to an AC potential (e.g. a different AC potential) independently. In other words, in embodiments, the electrodes of the array may be independently addressable. In embodiments, the AC power source may operate at a frequency of from 10 kHz to 10 GHz, preferably from 100 kHz to 100 MHz.

In embodiments, the device may comprise two sets of conductive interdigitated fingers suitable for being electrically connected to an AC power source so that each set can be set at a different AC potential, and wherein each finger within a set has one of the plurality of rows of electrodes either on it and electrically (resistively) connected to it or over it, separated from it by an passivation layer, and capacitively connected to it. This setup has the advantage of being more economical than a set up wherein each electrode can be set to a potential independently. In other words, in embodiments, the electrical connections may comprise two sets of conductive interdigitated fingers, wherein each finger within a set has one of the plurality of rows of electrodes on it and electrically connected to it, and wherein the AC generator is electrically connected to the array of electrodes via the two sets of conductive interdigitated fingers in such a way that each set can be set at a different AC potential. Yet in other words, the field-flow fractionation device may further comprise two sets of conductive interdigitated fingers, wherein each finger within a set has one of the plurality of rows of electrodes on it and electrically connected to it, and wherein the AC generator can be electrically connected to the array of electrodes via the two sets of conductive interdigitated fingers in such a way that each set can be set at a different AC potential.

In order to make the two sets of conductive interdigitated fingers suitable for being electrically connected to an AC power source, each set can for instance be electrically connected to a connection pad, itself electrically (resistively or capacitively) connectable to the AC power source.

Embodiments wherein the device comprises said two sets of conductive interdigitated fingers, each being connected to a connection pad, represent examples of electrical connections connecting the electrodes of the array and allowing electrical (resistive or capacitive) connection to an AC power source, in such a way that adjacent rows can be set at different potentials and every other row can be set at the same AC potential.

In embodiments, the array of electrodes may further comprise, in addition to the connections allowing electrical (resistive or capacitive) connection to an AC power source, connections allowing electrical connection to a DC power source in such a way that adjacent rows can be set at different DC potentials and every other row can be set at the same DC potential. In other words, the electrodes of the array may be, but do not have to be, connectable to a DC power source in such a way that adjacent rows can be set at different DC potentials and every other row can be set at the same DC potential. In the most typical case, the electrodes of the array do not further comprise the connections allowing electrical connection to a DC power source.

In embodiments, the electrodes of the array may be pillars. In embodiments, the electrodes of the array may have a height, a width, and a depth, wherein the height is measured perpendicularly to the substrate on which the electrodes are present, wherein the width and the depth are two dimensions, orthogonal to each other and to the height, wherein the width is smaller or equal to the depth. In embodiments, the width may be equal to the depth.

In embodiments, the electrodes of the array may have a height of from 5 to 200 µm, preferably from 50 to 200 µm. This is typically determined by the required sample throughput and fabrication feasibility. Higher electrodes allow more throughput at the same flow rate. But higher electrodes, or electrodes of high aspect ratio, are more difficult to fabricate. The electrodes typically have similar height as the channel. More specifically, the electrodes have a height of from 80 to 100% of the channel height. For instance, the electrodes may have a height of 90% of the channel height, but preferably the same as the channel height. The channel height equals the distance between the channel bottom and the channel top. In embodiments where the electrodes of the array do not have a height equal to 100% of the channel height, a non-conductive structure, of lateral dimensions within 10% to the lateral dimensions of the electrodes, may be added on top of each electrodes in order to improve the throughput. The height of these non-conductive structures may be such that the combination electrode-non-conductive structure has a height of from 80 to 100% of the channel height, such as 90% of the channel height, but preferably the same as the channel height.

In embodiments, the electrodes of the array may have a width of from 1 to 50 µm, preferably from 5 to 20 µm. The width is dependent on the desirable electrical resistance of the electrodes of the array (such as pillar resistance) and the throughput requirement. Wider electrodes (e.g. wider pillars) allow higher electrodes, thus higher throughput.

In embodiments, the electrodes of the array may have a depth of from 1 to 50 µm, preferably from 5 to 20 µm. The depth is dependent on the desirable electrical resistance of the electrodes of the array (such as pillar resistance) and the throughput requirement. deeper electrodes (e.g. deeper pillars) allow higher electrodes, thus higher throughput.

In embodiments, the width is within 20% of the depth, preferably within 10% of the depth, preferably is the same as the depth.

In embodiments, the electrodes of the array may have a height to width ratio of from 5 to 20.

In embodiments, the electrodes within the array may be at a pitch of from 5 to 30 µm, preferably 10 to 20 µm. This is advantageous because it is small enough to allow a relatively high electrode density, which allows a high field gradient between electrodes set at different AC potentials, while simultaneously being large enough not to interfere significantly with the sample flow in the first direction along the channel.

In embodiments, adjacent electrodes belonging to adjacent rows within the array may be separated by a gap of from 1 to 50 µm, preferably from 5 to 20 µm.

In embodiments, the device may further comprise the AC power source, for instance connected to the array via the two sets of conductive interdigitated fingers.

In embodiments, the electrodes within the array may have a resistance lower than the resistance of the sample but larger than the resistance of the electrical connections.

In embodiments, the electrodes within the array may have a resistivity lower than 2*10⁵ ohm.m, preferably lower than 2*10¹ ohm.m, but larger than the resistivity of the conductive material used in the electrical connections for connecting each electrode to the AC power source.

In embodiments, the electrodes within the array may have a resistivity lower than 2*10⁵ ohm.m, preferably lower than 2*10¹ ohm.m, more preferably lower than 2*10⁻¹ ohm.m, but larger than the resistivity of the conductive material used in the electrical connections for connecting each electrode to the AC power source.

In embodiments, the electrodes within the array may have a resistivity lower than 2*10⁵ ohm.m, preferably lower than 2*10¹ ohm.m, more preferably lower than 2*10⁻¹ ohm.m but larger than the resistivity of the conductive interdigitated fingers.

It is advantageous to have the conductance of the electrodes of the array in between the conductivity of the sample and the conductivity of the electrical connections for connecting each electrode to the AC power source because it allows each electrode of the array to generate a local AC field. Since the sample typically has a resistivity of 2*10⁵ ohm.m or 3*10⁵ ohm.m if it is very diluted and has a resistivity close to deionized water and of about 2*10¹ ohm.m if it has a resistivity close to a phosphate-buffered saline, it is advantageous to have the electrodes within the array having a resistivity lower than these values, but larger than the resistivity of the electrical connections for connecting each electrode to the AC power source.

In embodiments, the electrodes within the array may have a resistivity of from 10⁻⁵ ohm.m to 1 ohm.m (e.g. from 10⁻⁴ ohm.m to 1 ohm.m or from 10⁻³ ohm.m to 2.10⁻¹ ohm.m), preferably from 5.10⁻⁵ to 10⁻³ ohm.m.

In embodiments, the cover of the channel may be transparent. For instance, it may be a glass cover.

FIG. 7 shows a schematic representation of a top view of an embodiment of the present invention. In this figure, a field-flow fractionation device (1) is depicted, for the continuous separation of sample components (2) comprising:
a. A channel (3) comprising a sample inlet (4), a buffer inlet (4), and a plurality of sample outlets (5). The sample outlets (5) are delimited by separation walls (14). The channel (3) is suitable for being coupled to a flow generator for translocating the sample components (2) along the channel (3) in a first direction (6) from the sample inlet (4) to the plurality of sample outlets (5),
b. A pair of electrodes (7) for electrical connection to a DC power source (V_{DC}) and positioned in such a way as to enable the generation across the channel (3) of an electric field in a second direction (8), perpendicular with the first direction (6),
c. An array of electrodes (9) for electrical (resistive or capacitive) connection to an AC power source (V_{AC}), being
   i. in a path taken by the sample components (2) in the channel (3),
   ii. arranged in a plurality of rows (10),
   iii. electrically connected by electrical connections (11) to the AC power source in such a way that adjacent rows (10) can be set at different AC potentials and every other row (10) can be set at the same AC potential. The rows (10) of the array are arranged so that they are at a third angle of from 40 to 50° with the first direction (6). Also, the length of each row (10) is adapted so that the electrodes (9) of the array form a rectangle with two sides parallel to the first direction (6) and two other sides, parallel to the second direction (8). The dotted arrow shows a path taken by one of the components (2) of the sample to end up in one of the outlets (5). Adjacent electrodes (9) belonging to adjacent rows (10) within the array are separated by a gap (25). Also depicted in FIG. 7 is a graph showing various sample fractions separated in the second direction (8) wherein the amplitude of the graph is proportional to the concentration of that fraction.

In embodiments, the actuator and the AC power source may be coupled to a controller programmed to allow for the simultaneous operation of the actuator and the AC power source.

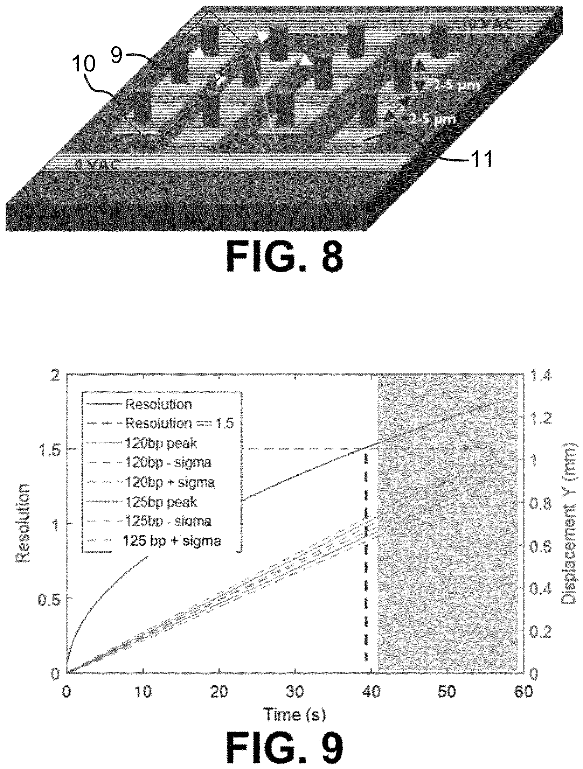

FIG. 9 is a graph of the resolution over time predicted by modelling of a device according to an embodiment of the present invention for separating a 120 bp double-strand DNA from a 125 bp double-strand DNA. This modelling considers a DC voltage of 12V between the pair of electrodes, an AC voltage of 10V between the two sets of the array, a channel having a length of 20 mm, a width of 1 mm, and a height of 0.15 mm. The inter-pillar distance is 4 µm. As can be seen on the graph, the displacement time for an analyte is 39s for a resolution of 1.5. The peak broadening was evaluated at 43 µm. The flow rate was 0.16 µl/min. The total processing time was 23 min. The upper solid curve shows how the resolution improves with the displacement time. The middle solid curve shows the displacement over time for a 125 bp DNA double-strand. The dashed curves directly above and below the middle solid curve show the displacement over time at +1 standard deviation and -1 standard deviation. The lower solid curve shows the displacement over time for a 120 bp DNA double-strand. The dashed curves directly above and below the lower solid curve show the displacement over time at +1 standard deviation and -1 standard deviation.

Any feature of the first aspect may be as correspondingly described in any embodiment of the second aspect.

In a second aspect, the present invention relates to a method for manufacturing a field-flow fractionation device according to any embodiment of the first aspect, comprising the steps of:
a. Providing a channel comprising a sample inlet and a plurality of sample outlets, the channel being suitable for being coupled to a flow generator for translocating the sample components along the channel in a first direction from the sample inlet to the plurality of sample outlets,
b. Providing an actuator, which is not the flow generator, for translocating the sample components in a second direction, at a first angle with the first direction, for instance by providing a pair of electrodes, for electrical connection to a DC power source, positioned in such a way as to enable the generation across the channel of an electric field in a second direction, at an angle with the first direction,
c. Providing an array of electrodes for electrical or capacitive connection to an AC power source, which is not the flow generator, and which is distinct from the actuator, being
   i. in a path taken by the sample components in the channel,
   ii. arranged in a plurality of rows and electrically connected by electrical connections in such a way that adjacent rows can be set at different AC potentials and every other row can be set at the same AC potential.

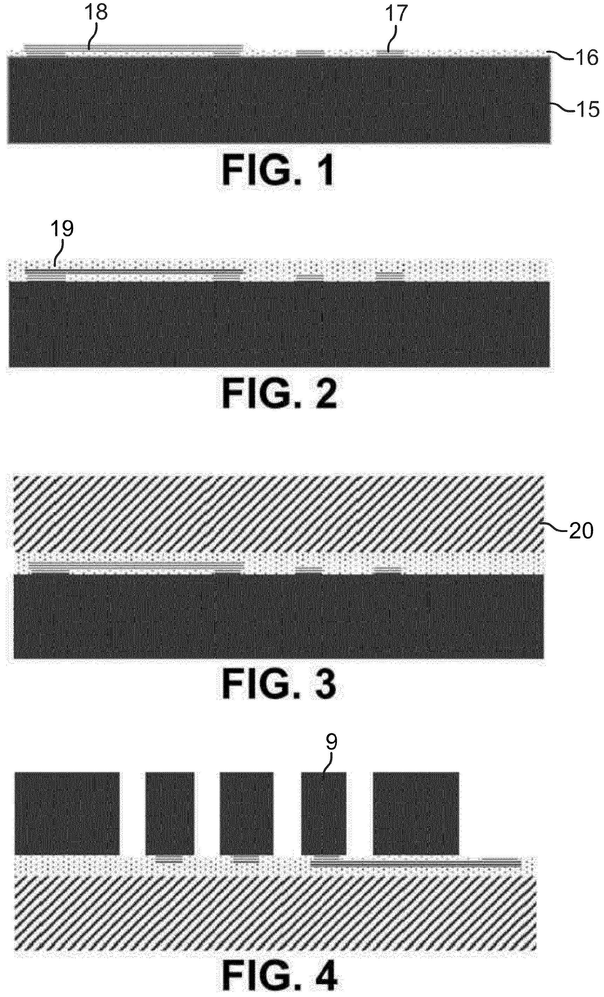

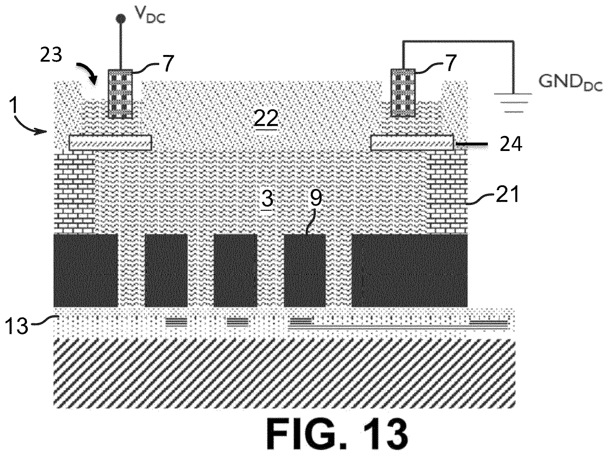

FIG. 13 shows an illustrative embodiment of a device (1) according to an embodiment of the present invention. To fabricate the device (1) of FIG. 13, step c of providing the array of electrodes (9) can for instance be performed as follow. We now refer to FIG. 1. A doped semiconductor substrate (15) (e.g. doped silicon (15)) is provided and a dielectric layer (16) (e.g. an oxide layer (16)) is formed thereon. An array of contact positions is then defined in the dielectric layer by etching the dielectric layer so as to form openings exposing the doped semiconductor substrate (15). The array of contact positions can be arranged as correspondingly described in any embodiment for the array of electrodes. Theses contact positions are arranged in a plurality of rows (10). For instance, the array of contact positions may comprise at least four rows (10) which each comprise at least two contact positions.

The openings are then filled with a conductive material (e.g. aluminium), thereby forming an array of bond pads (17) corresponding to the array of contact positions, until it overflows and a homogeneous layer of conductive material is formed. Parts of this layer is then etched to leave connecting lines (18) electrically connecting together bond pads (17) belonging to every other row (10) of the array, on one hand, and electrically connecting together bond pads (17) belonging to the remaining rows (10) of the array, on the other hand. For instance, these connecting lines (18) can form two sets of conductive interdigitated fingers (11), wherein each finger (11) within a set has one of the plurality of rows (10) of bond pads (17) on it and is electrically (resistively or capacitively) connected to it.

We now refer to FIG. 2. An isolation layer of dielectric material (19) (e.g. an oxide (19) such as silicon oxide (19)) is formed between and over the conductive lines (18) and this layer (19) is then planarized in such a way as to still cover all the conductive lines (18).

We now refer to FIG. 3. A base substrate (20) (e.g. a silicon wafer (20)) is bonded to the layer of dielectric material. In preferred embodiments, the base substrate (20) is not doped.

We now refer to FIG. 4 where the structure is shown flipped upside down. The doped semiconductor substrate (15) is optionally grinded until its height corresponds to the height wished for the electrodes (9) of the array. The doped semiconductor substrate (15) is then patterned by etching in order to form the array of electrodes (9) overlapping with the array of contact positions, and hence the array of bond pads (17). Each electrode (9) of the array has its base in electrical contact with a bond pad (17).

FIG. 8 shows a perspective view corresponding to FIG. 4.

FIG. 5 shows a preferred alternative to FIG. 3 where a passivation layer (13) (e.g. a dielectric layer (13) such as a SiO₂ layer (13)) is formed between the doped semiconductor substrate (15) and the bond pads (17).

In order to form the structure of FIG. 5, a doped semiconductor substrate (15) (e.g. doped silicon (15)) is provided and a passivation layer (13) (e.g. an oxide layer (13)) is formed thereon. An array of contact positions is then defined in the dielectric layer by etching the dielectric layer so as to form openings which are not exposing the doped semiconductor substrate (15). In other words, the bottom surfaces of these openings belong to the passivation layer (13). These openings are arranged so as to form an array of a plurality of rows (10). For instance, the array may comprise at least four rows (10) which comprise at least two openings.

The openings are then filled with a conductive material (e.g. aluminum or copper), thereby forming bond pads (17), until it overflows and a homogeneous layer of conductive material is formed. Parts of this layer are then etched to leave connecting lines (18) electrically connecting together bond pads (17) belonging to every other row (10) of the array, on one hand, and electrically connecting together openings belonging to the remaining rows (10) of the array, on the other hand. For instance, these connecting lines can form two sets of conductive interdigitated fingers (11), wherein each finger (11) within a set has one of the plurality of rows (10) of bond pads (17) on it and is electrically (resistively or capacitively) connected to it.

A layer of dielectric material (19) (e.g. an oxide (19) such as silicon oxide (19)) is formed between and over the conductive lines (18) and this layer is then planarized in such a way as to still cover all the conductive lines (18).

A base substrate (20) (e.g. a silicon wafer (20)) is bonded to the layer of dielectric material (19). The resulting structure is depicted in FIG. 5.

We now refer to FIG. 6 where the structure is shown flipped upside down. The doped semiconductor substrate (15) is optionally grinded until its height corresponds to the height wished for the electrodes (9) of the array. The doped semiconductor substrate (15) is then patterned by etching in order to form the array of electrodes (9) overlapping with the array of contact positions, and hence the array of bond pads (17). Each electrode (9) of the array has its base in capacitive contact with a bond pad (17).

We now refer to FIG. 13. Step a of providing a channel (3) can comprise a step of forming sidewalls (21) on top of the structure obtained in FIG. 3 or 5, forming one or more separation walls (14) (see FIG. 7) for defining the plurality of outlets (5) downstream of the array of electrodes (9), said separation walls (14) having the top of said separation walls (14) being coplanar with the top of the sidewalls (21), and then bonding a cover (22) (e.g. a glass cover (22)) on top of the sidewalls (21) and the separation walls (14), thereby forming a channel (3) comprising a sample inlet (4) and a plurality of sample outlets (5).

In embodiments, before bonding a cover (22) on top of the sidewalls (21) and the separation walls (14), one or more further separation walls (14) may be formed for defining a plurality of inlets (4) upstream of the array of electrodes (9), wherein the top of said further separation walls (14) is also coplanar with the top of the sidewalls (21).

In an alternative embodiment, instead of forming sidewalls (21) on top of the structure obtained in FIG. 3 or 5, step a may comprise forming sidewalls (21) on top of a cover (22) (e.g. a glass cover (22)), forming one or more separation walls (14) on the top of the cover (22) for defining the plurality of outlets (5) downstream of the array of electrodes (9), the top of said separation walls (14) being coplanar with the top of the sidewalls (21), and bonding the top of the structure obtained in FIG. 3 or 5 with the top of the sidewalls (21) and the separation walls (14).

Of course, it is also possible to form the sidewalls (21) on the structure of FIG. 3 or 5 and the separation walls (14) on the cover (22), or vice versa.

Step b of providing the pair of electrodes (7) may comprise a step of forming two trenches (23, FIG. 13) in a cover (22) of the channel (3), said trenches (23) running along at least a portion of the length of the channel (3). In embodiments, this portion of the length may represent at least 50%, preferably at least 75% of the length of the channel (3). In embodiments, this portion of the length along which the trenches run may overlap with the entirety of the potion of the channel comprising the array.

A permeable membrane (24, FIG. 13) may be formed at the bottom of each trench, thereby separating the trench (23) in the cover (22) from the channel (3). The permeable membrane (24) typically allows electrical contact between liquid in the channel (3) and liquid in each of the trenches (23).

Each electrode (7) of the pair may then be placed in a distinct trench (23) so as to be immersed when a liquid is present in said trenches (23). In embodiments, both electrodes (7) may then be connected to a DC power source (V_{DC}).

Any feature of the second aspect may be as correspondingly described in any embodiment of the first aspect.

## Claims

1. A field-flow fractionation device (1) for the continuous separation of sample components (2) comprising:
a. A channel (3) comprising a sample inlet (4) and a plurality of sample outlets (5), the channel (3) being suitable for being coupled to a flow generator for translocating the sample components (2) along the channel (3) in a first direction (6) from the sample inlet (4) to the plurality of sample outlets (5),
b. An actuator (7), distinct from the flow generator, coupled to the channel (3), for translocating the sample components (2) in a second direction (8), at a first angle with the first direction (6),
c. An array of electrodes (9), distinct from the flow generator, and which is distinct from the actuator (7), being
- arranged in a plurality of rows (10), and
- comprising electrical connections (11) for electrically connecting the array to an AC power source in such a way that adjacent rows (10) can be set at different AC potentials and every other row (10) can be set at the same AC potential;
**characterized in that**
- the array of electrodes (9) is in a path taken by the sample components (2) in the channel (3), and
- the electrodes have a height of from 80 to 100% of the channel height.

2. The field-flow fractionation device (1) according to claim 1, further comprising the flow generator coupled to the channel (3).

3. The field-flow fractionation device (1) according to claim 2, wherein the flow generator is a pump.

4. The field-flow fractionation device (1) according to any one of the preceding claims, wherein the actuator (7) comprises a pair of electrodes (7) for connection to a DC power source (V_{DC}) and disposed in such a way as to enable the generation of an electric field in the second direction at an angle with the first direction.

5. The field-flow fractionation device (1) according to any one of the preceding claims, wherein adjacent rows (10) of the array are arranged so that adjacent electrodes (9) belonging to adjacent rows (10) are aligned in a direction forming a second angle (θ) with the first direction.

6. The field-flow fractionation device (1) according to any one of the preceding claims, wherein the actuator (7) comprises an acoustic wave generator (7).

7. The field-flow fractionation device (1) according to any one of the preceding claims, wherein the first angle is from 30 to 90°.

8. The field-flow fractionation device (1) according to any one of the preceding claims, wherein the array of electrodes (9) comprises at least four rows (10), each row comprising at least two electrodes (9).

9. The field-flow fractionation device (1) according to any one of the preceding claims, wherein the electrodes (9) of the array are made of doped silicon.

10. The field-flow fractionation device (1) according to any one of the preceding claims, wherein the electrodes (9) of the array have a height to width ratio of from 5 to 20.

11. The field-flow fractionation device (1) according to any one of the preceding claims, wherein adjacent electrodes belonging to adjacent rows (10) within the array are separated by a gap (25) of from 1 to 50 µm, preferably from 5 to 20 µm.

12. The field-flow fractionation device (1) according to any one of the preceding claims, wherein the electrical connections comprise two sets of conductive interdigitated fingers (11), wherein each finger (11) within a set has one of the plurality of rows of electrodes on it and is electrically connected to it.

13. The field-flow fractionation device (1) according to claim 12, further comprising the AC power source (V_{AC}) electrically connected to the two sets of conductive interdigitated fingers (11).

14. The field-flow fractionation device (1) according to any one of the preceding claims, wherein the electrodes (9) within the array have a resistivity lower than 2*10⁻¹ ohm.m but larger than the resistivity of the electrical connections (11).

15. A method for manufacturing a field-flow fractionation device (1) according to claim 1, comprising the steps of:
a. Providing a channel (3) comprising a sample inlet (4) and a plurality of sample outlets (5), the channel (3) being suitable for being coupled to a flow generator for translocating the sample components (2) along the channel (3) in a first direction (6) from the sample inlet (4) to the plurality of sample outlets (5),
b. Providing an actuator (7), which is not the flow generator, coupled to the channel (3), for translocating the sample components (2) in a second direction (8), at a first angle with the first direction (6),
c. Providing an array of electrodes (9), which is not the flow generator, and which is distinct from the actuator (7),
i. in a path taken by the sample components (2) in the channel (3),
- arranged in a plurality of rows (10), and
- comprising electrical connections (11) for electrically connecting the array to an AC power source in such a way that adjacent rows (10) can be set at different AC potentials and every other row (10) can be set at the same AC potential;
**characterized in that**
- the array of electrodes (9) is in a path taken by the sample components (2) in the channel (3), and
- the electrodes have a height of from 80 to 100% of the channel height.

## Patentansprüche

1. Eine Feldflussfraktionierungsvorrichtung (1) zur kontinuierlichen Abtrennung von Probenkomponenten (2) umfassend:
a.- Einen Kanal (3), der einen Probeneinlass (4) und eine Vielzahl von Probenauslässen (5) umfasst, wobei der Kanal (3) geeignet ist, mit einem Strömungsgenerator verbunden zu werden, um die Probenkomponenten (2) entlang des Kanals (3) in einer ersten Richtung (6) von dem Probeneinlass (4) zu der Vielzahl von Probenauslässen (5) zu verlagern,
b.- Ein vom Strömungsgenerator getrenntes Stellglied (7), das mit dem Kanal (3) verbunden ist, um die Probenkomponenten (2) in einer zweiten Richtung (8) in einem ersten Winkel zur ersten Richtung (6) zu verlagern,
c.- Ein Array von Elektroden (9), das sich von dem Strömungsgenerator unterscheidet und das sich von dem Stellglied (7) unterscheidet, das
- in einer Vielzahl von Reihen (10) angeordnet ist, und
- elektrische Verbindungen (11) zum elektrischen Verbinden des Arrays an eine Wechselstromquelle umfasst, sodass benachbarte Reihen (10) auf unterschiedliche Wechselstrompotentiale eingestellt werden können und jede zweite Reihe (10) auf das gleiche Wechselstrompotential eingestellt werden kann;
**dadurch gekennzeichnet, dass**
- sich das Array von Elektroden (9) auf einem von den Probenkomponenten (2) in dem Kanal (3) zurückgelegten Weg befindet, und
- die Elektroden eine Höhe von 80 bis 100% der Kanalhöhe aufweisen.

2. Die Feldflussfraktionierungsvorrichtung (1) nach Anspruch 1, weiter umfassend, dass der Strömungsgenerator mit dem Kanal (3) verbunden ist.

3. Die Feldflussfraktionierungsvorrichtung (1) nach Anspruch 2, wobei der Strömungsgenerator eine Pumpe ist.

4. Die Feldflussfraktionierungsvorrichtung (1) nach einem der vorstehenden Ansprüche, wobei das Stellglied (7) ein Paar von Elektroden (7) zum Verbinden mit einer Gleichstromquelle (V_{DC}) umfasst und so angeordnet, dass sie die Erzeugung eines elektrischen Feldes in der zweiten Richtung in einem ersten Winkel mit der ersten Richtung ermöglichen.

5. Die Feldflussfraktionierungsvorrichtung (1) nach einem der vorstehenden Ansprüche, wobei benachbarte Reihen (10) des Arrays von Elektroden so angeordnet sind, dass benachbarte Elektroden (9), die zu benachbarten Reihen (10) gehören, in einer Richtung ausgerichtet sind, die einen zweiten Winkel (θ) mit der ersten Richtung bildet.

6. Die Feldflussfraktionierungsvorrichtung (1) nach einem der vorstehenden Ansprüche, wobei das Stellglied (7) einen Schallwellengenerator (7) umfasst.

7. Die Feldflussfraktionierungsvorrichtung (1) nach einem der vorstehenden Ansprüche, wobei der erste Winkel zwischen 30 und 90° liegt.

8. Die Feldflussfraktionierungsvorrichtung (1) nach einem der vorstehenden Ansprüche, wobei das Array von Elektroden (9) mindestens vier Reihen (10) umfasst, wobei jede Reihe mindestens zwei Elektroden (9) umfasst.

9. Die Feldflussfraktionierungsvorrichtung (1) nach einem der vorstehenden Ansprüche, wobei die Elektroden (9) des Arrays aus dotiertem Silizium hergestellt sind.

10. Die Feldflussfraktionierungsvorrichtung (1) nach einem der vorstehenden Ansprüche, wobei die Elektroden (9) des Arrays ein Verhältnis von Höhe zu Breite von 5 bis 20 aufweisen.

11. Die Feldflussfraktionierungsvorrichtung (1) nach einem der vorstehenden Ansprüche, wobei benachbarte Elektroden, die zu benachbarten Reihen (10) innerhalb des Arrays gehören, durch einen Spalt (25) von 1 bis 50 µm, vorzugsweise von 5 bis 20 µm, getrennt sind.

12. Die Feldflussfraktionierungsvorrichtung (1) nach einem der vorstehenden Ansprüche, wobei die elektrischen Verbindungen zwei Sätze von leitfähigen, ineinandergreifenden Fingern (11) umfassen, wobei jeder Finger (11) innerhalb eines Satzes eine der Vielzahl von Reihen von Elektroden auf sich trägt und elektrisch mit ihr verbunden ist.

13. Die Feldflussfraktionierungsvorrichtung (1) nach Anspruch 12, weiter umfassend, dass die Wechselstromquelle (V_{AC}) elektrisch an die zwei Sätze leitfähiger ineinandergreifender Finger (11) verbunden ist.

14. Die Feldflussfraktionierungsvorrichtung (1) nach einem der vorstehenden Ansprüche, wobei die Elektroden (9) innerhalb des Arrays einen Widerstand aufweisen, der kleiner als 2*10⁻¹ Ohm.m, aber größer als der Widerstand der elektrischen Verbindungen (11) ist.

15. Ein Verfahren zum Herstellen einer Feldflussfraktionierungsvorrichtung (1) nach Anspruch 1, umfassend die Schritte:
a.- Bereitstellen eines Kanals (3), der einen Probeneinlass (4) und eine Vielzahl von Probenauslässen (5) umfasst, wobei der Kanal (3) geeignet ist, mit einem Strömungsgenerator verbunden zu werden, um die Probenkomponenten (2) entlang des Kanals (3) in einer ersten Richtung (6) von dem Probeneinlass (4) zu der Vielzahl von Probenauslässen (5) zu verlagern,
b.- Bereitstellen eines Stellglieds (7), das nicht der Strömungsgenerator ist, das mit dem Kanal (3) verbunden ist, um die Probenkomponenten (2) in einer zweiten Richtung (8) unter einem ersten Winkel zur ersten Richtung (6) zu verlagern,
c.- Bereitstellen eines Arrays von Elektroden (9), das nicht der Strömungsgenerator ist, und das sich von dem Stellglied (7) unterscheidet,
i.- sich auf einem von den Probenkomponenten (2) in dem Kanal (3) zurückgelegten Weg befindet,
- in einer Vielzahl von Reihen (10) angeordnet ist, und
- elektrische Verbindungen (11) zum elektrischen Verbinden des Arrays an eine Wechselstromquelle umfasst, sodass benachbarte Reihen (10) auf unterschiedliche Wechselstrompotentiale eingestellt werden können und jede zweite Reihe (10) auf das gleiche Wechselstrompotential eingestellt werden kann;
**dadurch gekennzeichnet, dass**
- sich das Array von Elektroden (9) auf einem von den Probenkomponenten (2) in dem Kanal (3) zurückgelegten Weg befindet, und
- die Elektroden eine Höhe von 80 bis 100% der Kanalhöhe aufweisen.

## Revendications

1. Un dispositif de fractionnement par champ de flux (1) pour la séparation continue des composants d'échantillon (2) comprenant :
a. Un canal (3) comprenant une entrée d'échantillon (4) et une pluralité de sorties d'échantillon (5), le canal (3) étant adapté pour être couplé à un générateur de flux pour transloquer les composants d'échantillon (2) le long du canal (3) dans une première direction (6) de l'entrée d'échantillon (4) à la pluralité de sorties d'échantillon (5),
b. Un actionneur (7), distinct du générateur de flux, couplé au canal (3), pour transloquer les composants d'échantillon (2) dans une seconde direction (8), à un premier angle avec la première direction (6),
c. Un réseau d'électrodes (9), distinct du générateur de flux, et distinct de l'actionneur (7), étant
- disposé en une pluralité de rangées (10), et
- comprenant des connexions électriques (11) pour connecter électriquement le réseau à une source d'alimentation en courant alternatif de telle manière que les rangées adjacentes (10) puissent être réglées à des potentiels alternatifs différents et que chaque autre rangée (10) puisse être réglée au même potentiel alternatif ;
**caractérisé en ce que**
- le réseau d'électrodes (9) est dans un chemin emprunté par les composants d'échantillon (2) dans le canal (3), et
- les électrodes ont une hauteur de 80 à 100 % de la hauteur du canal.

2. Le dispositif de fractionnement par champ de flux (1) selon la revendication 1, comprenant en outre le générateur de flux couplé au canal (3).

3. Le dispositif de fractionnement par champ de flux (1) selon la revendication 2, dans lequel le générateur de flux est une pompe.

4. Le dispositif de fractionnement par champ de flux (1) selon l'une quelconque des revendications précédentes, dans lequel l'actionneur (7) comprend une paire d'électrodes (7) pour la connexion à une source d'alimentation en courant continu (VDC) et disposée de manière à permettre la génération d'un champ électrique dans la seconde direction à un angle avec la première direction.

5. Le dispositif de fractionnement par champ de flux (1) selon l'une quelconque des revendications précédentes, dans lequel les rangées adjacentes (10) du réseau sont disposées de sorte que les électrodes adjacentes (9) appartenant à des rangées adjacentes (10) soient alignées dans une direction formant un second angle (θ) avec la première direction.

6. Le dispositif de fractionnement par champ de flux (1) selon l'une quelconque des revendications précédentes, dans lequel l'actionneur (7) comprend un générateur d'ondes acoustiques (7).

7. Le dispositif de fractionnement par champ de flux (1) selon l'une quelconque des revendications précédentes, dans lequel le premier angle est de 30 à 90°.

8. Le dispositif de fractionnement par champ de flux (1) selon l'une quelconque des revendications précédentes, dans lequel le réseau d'électrodes (9) comprend au moins quatre rangées (10), chaque rangée comprenant au moins deux électrodes (9).

9. Le dispositif de fractionnement par champ de flux (1) selon l'une quelconque des revendications précédentes, dans lequel les électrodes (9) du réseau sont en silicium dopé.

10. Le dispositif de fractionnement par champ de flux (1) selon l'une quelconque des revendications précédentes, dans lequel les électrodes (9) du réseau ont un rapport hauteur/largeur de 5 à 20.

11. Le dispositif de fractionnement par champ de flux (1) selon l'une quelconque des revendications précédentes, dans lequel les électrodes adjacentes appartenant à des rangées adjacentes (10) dans le réseau sont séparées par un espace (25) de 1 à 50 µm, de préférence de 5 à 20 µm.

12. Le dispositif de fractionnement par champ de flux (1) selon l'une quelconque des revendications précédentes, dans lequel les connexions électriques comprennent deux ensembles de doigts conducteurs interdigités (11), dans lequel chaque doigt (11) d'un ensemble a l'une des pluralités de rangées d'électrodes sur lui et est électriquement connecté à celle-ci.

13. Le dispositif de fractionnement par champ de flux (1) selon la revendication 12, comprenant en outre la source d'alimentation en courant alternatif (VAC) connectée électriquement aux deux ensembles de doigts conducteurs interdigités (11).

14. Le dispositif de fractionnement par champ de flux (1) selon l'une quelconque des revendications précédentes, dans lequel les électrodes (9) dans le réseau ont une résistivité inférieure à 2*10⁻¹ ohm.m mais supérieure à la résistivité des connexions électriques (11).

15. Un procédé de fabrication d'un dispositif de fractionnement par champ de flux (1) selon la revendication 1, comprenant les étapes de :
a. Fournir un canal (3) comprenant une entrée d'échantillon (4) et une pluralité de sorties d'échantillon (5), le canal (3) étant adapté pour être couplé à un générateur de flux pour transloquer les composants d'échantillon (2) le long du canal (3) dans une première direction (6) de l'entrée d'échantillon (4) à la pluralité de sorties d'échantillon (5),
b. Fournir un actionneur (7), qui n'est pas le générateur de flux, couplé au canal (3), pour transloquer les composants d'échantillon (2) dans une seconde direction (8), à un premier angle avec la première direction (6),
c. Fournir un réseau d'électrodes (9), qui n'est pas le générateur de flux, et qui est distinct de l'actionneur (7),
i. dans un chemin emprunté par les composants d'échantillon (2) dans le canal (3),
- disposé en une pluralité de rangées (10), et
- comprenant des connexions électriques (11) pour connecter électriquement le réseau à une source d'alimentation en courant alternatif de telle manière que les rangées adjacentes (10) puissent être réglées à des potentiels alternatifs différents et que chaque autre rangée (10) puisse être réglée au même potentiel alternatif ;
**caractérisé en ce que**
- le réseau d'électrodes (9) est dans un chemin emprunté par les composants d'échantillon (2) dans le canal (3), et
- les électrodes ont une hauteur de 80 à 100 % de la hauteur du canal.
